(19) Europäisches Patentamt
European Patent Office
Office européen des brevets

(11) Veröffentlichungsnummer: **0 046 860**
**B1**

(12) # EUROPÄISCHE PATENTSCHRIFT

(45) Veröffentlichungstag der Patentschrift: **14.03.84**

(51) Int. Cl.³: **C 07 C 97/07**, C 07 C 101/34, A 01 N 35/06, A 01 N 37/44

(21) Anmeldenummer: **81105558.1**

(22) Anmeldetag: **15.07.81**

(54) **Cyclohexan-1,3-dion-Derivate.**

(30) Priorität: **02.09.80 DE 3032973**

(43) Veröffentlichungstag der Anmeldung: **10.03.82 Patentblatt 82/10**

(45) Bekanntmachung des Hinweises auf die Patenterteilung: **14.03.84 Patentblatt 84/11**

(84) Benannte Vertragsstaaten: **AT BE CH DE FR GB IT LI LU NL SE**

(56) Entgegenhaltungen: **CENTRAL PATENTS INDEX, Basic abstracts journal, section C, AGDOC 16. Mai 1979, Derwent Publications London, Abkürzung 22928B/12, G.B.**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Jahn, Dieter, Dr., Burgunder Weg 8, D-6803 Neckarhausen (DE)**
Erfinder: **Rohr, Wolfgang, Dr., In der Dreispitz 13, D-6706 Wachenheim (DE)**
Erfinder: **Becker, Rainer, Dr., Sonnenwendstrasse 83, D-6702 Bad Duerkheim (DE)**
Erfinder: **Goetz, Norbert, Dr., Schoefferstrasse 25, D-6520 Worms (DE)**
Erfinder: **Wuerzer, Bruno, Dr., Ruedigerstrasse 13, D-6701 Otterstadt (DE)**

**EP 0 046 860 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Cyclohexan-1,3-dion-Derivate

Die vorliegende Erfindung betrifft Cyclohexan-1,3-dion-Derivate, Verfahren zur Herstellung dieser Verbindungen sowie Herbizide, welche diese Verbindungen enthalten.

Es ist bekannt, Cyclohexan-1,3-dion-Derivate, z. B. das Natriumsalz des 2-(1-Allyloxyaminobutyliden)-4-methoxycarbonyl-5,5-dimethylcyclohexan-1,3-dions (DE-OS 2 439 104) oder das 2-(1-Ethoxyaminobutyliden)-5-(2-ethylthiopropyl)-cyclohexan-1,3-dion (DE-OS 2 822 304) oder das 2-(1-Allyloxyaminobutyliden)-5-cyclohexyl-cyclohexan-1,3-dion (JP-OS 54/019 945) als Herbizide zu verwenden. Ihre Aktivität konzentriert sich auf Ungräser und grasartige Kulturpflanzen. Gleichzeitig zeichnen sie sich durch eine sehr gute Verträglichkeit für breitblättrige Kulturpflanzen aus.

Es wurde nun gefunden, daß Verbindungen der allgemeinen Formel I

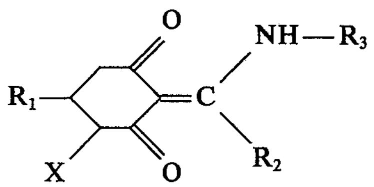

(I)

in der $R_1$ ein gegebenenfalls durch 1 bis 5 Alkylgruppen substituiertes Cyclohexenyl oder Cyclohexadienyl,

X Wasserstoff, Alkoxycarbonyl mit 1 bis 2 Kohlenstoffatomen im Alkoxyrest und

$R_2$ Alkyl mit 1 bis 5 Kohlenstoffatomen und

$R_3$ Alkyl mit 1 bis 4 Kohlenstoffatomen, Alkenyl mit 3 bis 4 Kohlenstoffatomen, Propargyl oder Halogenalkenyl mit 3 bis 4 Kohlenstoffatomen und 1 bis 3 Halogenatomen bedeutet, und die Salze dieser Verbindungen gegen Gräser herbizid wirksam sind und sowohl breitblättrige Kulturpflanzen und monokotyle Kulturen, welche nicht zur Familie der Gräser (Gramineen) zählen, als auch überraschenderweise einige grasartige Kulturpflanzen wie Getreide und Reis nicht oder nur wenig schädigen.

Die neuen Verbindungen können in mehreren tautomeren Formen vorliegen:

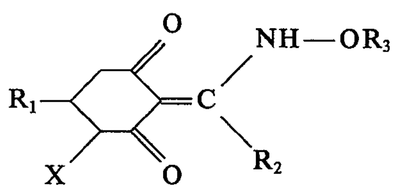

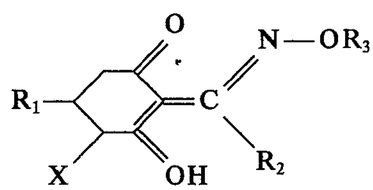

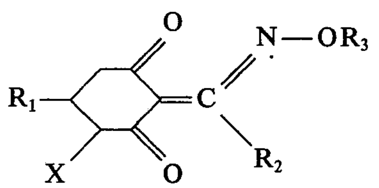

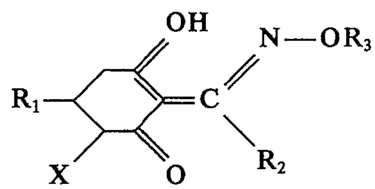

Die Cyclohexan-1,3-dion-Derivate sind nach folgender Reaktionsgleichung erhältlich:

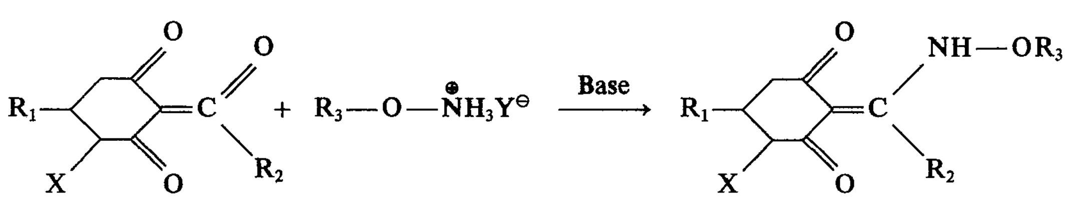


(II) (I)

wobei $R^1$, $R^2$, $R^3$ und X die oben genannten Bedeutungen haben und Y ein Anion bedeutet.

Man führt die Reaktion zweckmäßig in heterogener Phase in einem inerten Lösungsmittel bei Temperaturen zwischen 0 und 80°C oder dem Siedepunkt des Gemisches in Gegenwart einer Base durch. Basen sind beispielsweise Carbonate, Hydrogencarbonate, Acetate, Alkoholate, Hydroxide oder Oxide von Alkali- oder Erdalkalimetallen, besonders von Natrium und Kalium sowie Magnesium und Kalzium.

Daneben können auch organische Basen wie Pyridin oder tertiäre Amine Verwendung finden.

Ein für die Umsetzung besonders geeigneter definierter pH-Bereich reicht von pH 2 bis pH 7, insbesondere von pH 4,5 bis pH 5,5. Die Einstellung des pH-Bereichs für die Umsetzung erfolgt vorteilhaft durch Zusatz von Acetaten, beispielsweise Alkaliacetaten, insbesondere Natrium- oder Kaliumacetat oder ihren Mischungen. Die Alkaliacetate werden beispielsweise angewendet in Mengen von 0,5 bis 2 Mol, bezogen auf die Ammoniumverbindung.

Als Lösungsmittel sind geeignet beispielsweise Methanol, Ethanol, Isopropanol, Benzol, Tetrahydrofuran, Chloroform, Acetonitril, Dichlorethan, Essigsäureethylester, Dioxan, Dimethylsulfoxid.

Die Reaktion ist nach einigen Stunden beendet, das Reaktionsprodukt kann durch Einengen der Mischung, Zugabe von Wasser und Extraktion mit einem unpolaren Lösungsmittel, sowie Abdestillieren des Lösungsmittels unter vermindertem Druck, isoliert werden.

Darüber hinaus ist die Herstellung der neuen Verbindungen auch durch Umsetzung der Verbindungen II mit den entsprechenden Aminen $R_3$-$ONH_2$ durchführbar.

Die Verbindungen der Formel II können durch Acylierung der Cyclohexan-1,3-dione III, wie dies beispielsweise in Tetrahedron Letters 29, 2491 beschrieben ist, erhalten werden.

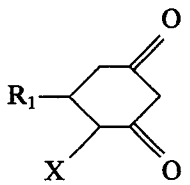

(III)

Verbindungen der Formel III können außerdem in folgenden tautomeren Formeln IIIa und IIIb vorliegen.

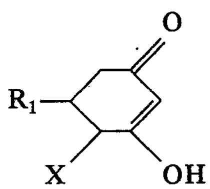

(IIIa)

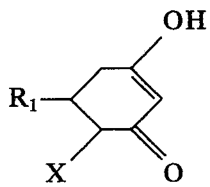

(IIIb)

Verbindungen der Formel III sind aus Aldehyden $R_1CHO$ nach literaturbekannten Methoden beispielsweise durch Aldol-Kondensation mit Aceton und anschließender Cyclisierung mit Malonsäureestern analog Organic Synthesis Coll. Vol. II, S. 200 darzustellen. Auch durch Umsetzung des Aldehyds $R_1CHO$ mit Malonsäure nach Knoevenagel-Doebner (siehe Org. Reactions Band 15, S. 204), Veresterung der entstehenden Säure sowie Cyclisierung mit Acetessigestern, in analoger Weise wie dies z. B. in Chem. Berichten Band 96, S. 2946 beschrieben wird, gelangt man zu den Zwischenprodukten der Formel III.

In Fällen, bei denen $R_1$ 1,3,3-Trimethylcyclohexen-1-yl-2 bzw. 2,4,4-Trimethylcyclohexen-1-yl-3 bedeutet, geht man zweckmäßig von den leicht zugänglichen Verbindungen $\alpha$- bzw. $\beta$-Ionen aus, wie dies in Chemical Abstracts 72, 111 408 beschrieben ist.

$R_1$ kann beispielsweise folgende Reste bedeuten

Cyclohexen-1-yl-4
Cyclohexen-1-yl-3
Cyclohexen-1-yl-1
5-Methylcyclohexen-1-yl-4
1-Methylcyclohexen-1-yl-2
1,3-Dimethylcyclohexen-1-yl-2
3,5-Dimethylcyclohexen-1-yl-4
3,6-Dimethylcyclohexen-1-yl-4
3,3-Dimethylcyclohexen-1-yl-2
1,3,3-Trimethylcyclohexen-1-yl-2
2,4,4-Trimethylcyclohexen-1-yl-3
3,5,6-Trimethylcyclohexen-1-yl-4
3,5,5-Trimethylcyclohexen-1-yl-4
3,3,5-Trimethylcyclohexen-1-yl-4
1,5,5-Trimethylcyclohexadien-1,3-yl-4
4,6,6-Trimethylcyclohexadien-1,3-yl-5
2,6,6-Trimethylcyclohexadien-1,3-yl-1
1,2,3,5-Trimethylcyclohexen-1-yl-4
1,3,3,4-Tetramethylcyclohexen-1-yl-2

2,4,4,5-Tetramethylcyclohexen-1-yl-3
3,5,5,6-Tetramethylcyclohexen-1-yl-4

$R_2$ kann folgende Reste bedeuten:
Methyl, Ethyl, n-Propyl, i-Propyl, n-Butyl, sec.Butyl, i-Butyl, tert.Butyl, normale und verzweigte Pentylreste.

$R_3$ kann beispielsweise folgende Reste bedeuten:
Methyl, Ethyl, n-Propyl, i-Propyl, n-Butyl, sec.Butyl, i-Butyl, tert.Butyl, Allyl, Propargyl, 1-Chlorpropen-1-yl-3, 2-Chlorpropen-1-yl-3, 1,2-Dichlorpropen-1-yl-3, 1,1,2-Trichlorpropen-1-yl-3.

X kann Wasserstoff, Methoxycarbonyl oder Ethoxycarbonyl bedeuten.

Die Salze der Verbindungen sind beispielsweise die Alkalisalze, insbesondere die Kalium- oder Natriumsalze.

Die Natrium- und Kaliumsalze der neuen Verbindungen können durch Behandeln dieser Verbindungen mit Natrium- oder Kaliumhydroxid in wäßriger Lösung oder in einem organischen Lösungsmittel wie Methanol, Ethanol, Aceton erhalten werden.

Auch Natrium- und Kaliumalkoholate können als Basen dienen.

Andere Metallsalze, z. B. die Mangan-, Kupfer-, Zink-, Eisen- und Bariumsalze können aus dem Natriumsalz durch Reaktion mit den entsprechenden Metallchloriden in wäßriger Lösung hergestellt werden.

Die folgenden Beispiele erläutern die Herstellung der neuen Cyclohexan-1,3-dione.

In den Beispielen verhalten sich Gewichtsteile zu Volumenteilen wie Kilogramm zu Liter.

## Beispiel 1

3,5 Gewichtsteile 2-Butyryl-5-(cyclohexen-1-yl-4)-cyclohexan-1,3-dion werden in 100 Volumenteilen Ethanol gelöst und 1,5 Gewichtsteile Allyloxyammoniumchlorid sowie 1,2 Gewichtsteile wasserfreies Natriumacetat zugegeben. Die Mischung wird 16 Stunden bei Raumtemperatur gerührt, das Lösungsmittel unter vermindertem Druck abdestilliert, der Rückstand mit jeweils 50 Volumenteilen Wasser und Dichlormethan gerührt, die organische Phase abgetrennt und die wäßrige Phase mit 50 Volumenteilen Dichlormethan extrahiert. Die vereinigten organischen Phasen werden mit Wasser gewaschen, über Natriumsulfat getrocknet und im Vakuum eingeengt.

Man erhält 3,5 Gewichtsteile 2-(1-Allyloxyaminobutyliden-5-(cyclohexen-1-yl-4)-cyclohexan-1,3-dion als Öl mit der folgenden Strukturformel (Wirkstoff Nr. 1):

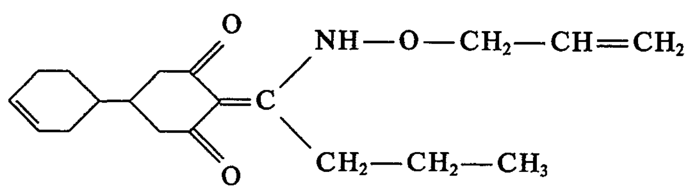

| | | | |
|---|---|---|---|
| $C_{19}H_{27}NO_3$ | (MG 317): | | |
| Ber.: | C 71.9 | H 8.6 | N 4.4 |
| Gef.: | C 71.6 | H 8.8 | N 4.2 |

## Beispiel 2

8,0 Gewichtsteile 2-Butyryl-5-(1,3,3-trimethylcyclohexen-1-yl-2)-cyclohexan-1,3-dion werden mit 2,9 Gewichtsteilen Allyloxyammoniumchlorid sowie 2,4 Gewichtsteilen Natriumacetat in 100 Volumenteilen Ethanol nach Beispiel 1 umgesetzt und aufgearbeitet. Man erhält 9,0 Gewichtsteile 2-(1-Allyloxyaminobutyliden)-5-(1,3,3-trimethylcyclohexen-1-yl-2)-cyclohexan-1,3-dion als dickflüssiges Öl (Wirkstoff Nr. 2).

| | | | |
|---|---|---|---|
| $C_{22}H_{33}NO_3$ | (MG 360): | | |
| Ber.: | C 73.5 | H 9.2 | N 3.9 |
| Gef.: | C 73.2 | H 9.1 | N 3.9 |

## Beispiel 3

9,0 Gewichtsteile 2-Butyryl-4-carbmethoxy-5-(1,3,3-trimethylcyclohexen-1-yl-2)-cyclohexan-1,3-dion werden in 100 Volumenteilen Ethanol gelöst und 1,5 Gewichtsteile Ethoxyamin zugegeben. Die Mischung wird 8 Stunden bei Raumtemperatur gerührt und im Vakuum eingeengt. Der Rückstand

wird in 50 Volumenteilen Dichlormethan aufgenommen, die Lösung mit 5-prozentiger Salzsäure und Wasser gewaschen und im Vakuum eingeengt. Man erhält in quantitativer Ausbeute 2-(1-Ethoxy-aminobutyliden)-4-carbmethoxy-5-(1,3,3-trimethylcyclohexen-1-yl-2)-cyclohexan-1,3-dion als Kristalle mit Schmelzpunkt 70°C (Wirkstoff Nr. 3).

Die folgenden Verbindungen erhält man in gleicher Weise:

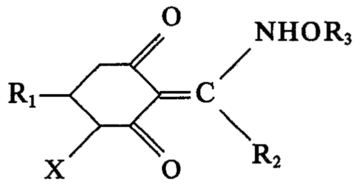

(I)

| Nr. | $R_1$ | $R_2$ | $R_3$ | X |
|---|---|---|---|---|
| 4 | Cyclohexen-1-yl-4 | $n\text{-}C_3H_7$ | $-CH_2-CH=CH_2$ | $COOCH_3$ |
| 5 | desgl. | $n\text{-}C_3H_7$ | $-C_2H_5$ | $COOCH_3$ |
| 6 | desgl. | $n\text{-}C_3H_7$ | $-C_2H_5$ | H |
| 7 | 5-Methylcyclohexen-1-yl-4 | $n\text{-}C_3H_7$ | $-CH_2-CH=CH_2$ | $COOCH_3$ |
| 8 | desgl. | $n\text{-}C_3H_7$ | $-C_2H_5$ | $COOCH_3$ |
| 9 | desgl. | $n\text{-}C_3H_7$ | $-CH_2-CH=CH_2$ | H |
| 10 | desgl. | $n\text{-}C_3H_7$ | $-C_2H_5$ | H |
| 11 | 1,3,3-Trimethylcyclohexen-1-yl-2 | $n\text{-}C_3H_7$ | $-CH_2-CH=CH_2$ | $COOCH_3$ |
| 12 | desgl. | $n\text{-}C_3H_7$ | $-C_2H_5$ | H |
| 13 | desgl. | $n\text{-}C_3H_7$ | $n\text{-}C_3H_7$ | H |
| 14 | desgl. | $n\text{-}C_3H_7$ | $-CH_2-C\equiv CH$ | H |
| 15 | desgl. | $-C_2H_5$ | $-CH_2-CH=CH_2$ | H |
| 16 | desgl. | $-C_2H_5$ | $-C_2H_5$ | H |
| 17 | 2,4,4-Trimethylcyclohexen-1-yl-3 | $n\text{-}C_3H_7$ | $-CH_2-CH=CH_2$ | $COOCH_3$ |
| 18 | desgl. | $n\text{-}C_3H_7$ | $-C_2H_5$ | $COOCH_3$ |
| 19 | desgl. | $n\text{-}C_3H_7$ | $-CH_2-CH=CH_2$ | H |
| 20 | desgl. | $n\text{-}C_3H_7$ | $-C_2H_5$ | H |
| 21 | 1,5,5-Trimethylcyclohexan-1,3-dien-yl-4 | $n\text{-}C_3H_7$ | $-CH_2-CH=CH_2$ | $COOCH_3$ |
| 22 | desgl. | $n\text{-}C_3H_7$ | $-C_2H_5$ | $COOCH_3$ |
| 23 | desgl. | $n\text{-}C_3H_7$ | $-CH_2-CH=CH_2$ | H |
| 24 | desgl. | $n\text{-}C_3H_7$ | $-C_2H_5$ | H |
| 25 | 1,3,3-Trimethylcyclohexen-1-yl-2 | $n\text{-}C_3H_7$ | $-CH_2-CCl=CCl_2$ | H |
| 26 | desgl. | $n\text{-}C_3H_7$ | $-CH_2-CCl=CH_2$ | H |
| 27 | desgl. | $n\text{-}C_3H_7$ | $-CH_2-CH=CHCl$ | H |
| 28 | 2,4,4,6-Tetramethylcyclohexen-1-yl-3 | $n\text{-}C_3H_7$ | $-C_2H_5$ | H |
| 29 | desgl. | $n\text{-}C_3H_7$ | $-CH_2-CH=CH_2$ | H |
| 30 | 1,3,3,4-Tetramethylcyclohexen-1-yl-2 | $n\text{-}C_3H_7$ | $-C_2H_5$ | $COOCH_3$ |
| 31 | desgl. | $n\text{-}C_3H_7$ | $-CH_2-CH=CH_2$ | $COOCH_3$ |
| 32 | desgl. | $n\text{-}C_3H_7$ | $C_2H_5$ | H |
| 33 | desgl. | $n\text{-}C_3H_7$ | $-CH_2-CH=CH_2$ | H |

(Fortsetzung)

| Nr. | $R_1$ | $R_2$ | $R_3$ | X |
|---|---|---|---|---|
| 34 | 1,3,3-Trimethylcyclohexen-1-yl-2 | n-$C_4H_9$ | $C_2H_5$ | H |
| 35 | desgl. | n-$C_4H_9$ | $-CH_2-CH=CH_2$ | H |
| 36 | 1,3,3-Trimethylcyclohexen-1-yl-2 Natriumsalz | $C_3H_7$ | $-CH_2-CH=CH_2$ | H |
| 37 | 1,3,3-Trimethylcyclohexen-1-yl-2 Kupfersalz | $C_3H_7$ | $-CH_2-CH=CH_2$ | H |
| 38 | 1-Methylcyclohexen-1-yl-4 | $C_3H_7$ | $C_2H_5$ | H |
| 39 | desgl. | $C_3H_7$ | $-CH_2-CH=CH_2$ | H |
| 40 | desgl. | $C_2H_5$ | $C_2H_5$ | H |
| 41 | desgl. | $C_2H_5$ | $-CH_2-CH=CH_2$ | H |
| 42 | desgl. | $C_3H_7$ | $-CH_2-CH=CHCl$ | H |
| 43 | 5-Methylcyclohexen-1-yl-4 | $C_2H_5$ | $C_2H_5$ | H |
| 44 | desgl. | $C_2H_5$ | $-CH_2-CH=CH_2$ | H |
| 45 | desgl. | $C_3H_7$ | $-CH_2-CH=CHCl$ | H |
| 46 | 1,2-Dimethylcyclohexen-1-yl-4 | $C_3H_7$ | $C_2H_5$ | H |
| 47 | desgl. | $C_3H_7$ | $-CH_2-CH=CH_2$ | H |
| 48 | desgl. | $C_3H_7$ | $-CH_2-CH=CHCl$ | H |
| 49 | desgl. | $C_2H_5$ | $C_2H_5$ | H |
| 50 | desgl. | $C_2H_5$ | $-CH_2-CH=CH_2$ | H |
| 51 | 1,5-Dimethylcyclohexen-1-yl-4 | $C_2H_5$ | $C_2H_5$ | H |
| 52 | desgl. | $C_2H_5$ | $-CH_2-CH=CH_2$ | H |
| 53 | desgl. | $C_3H_7$ | $C_2H_5$ | H |
| 54 | desgl. | $C_3H_7$ | $-CH_2-CH=CH_2$ | H |
| 55 | desgl. | $C_3H_7$ | $-CH_2-CH=CH_2-Cl$ | H |
| 56 | 2,5-Dimethylcyclohexen-1-yl-4 | $C_3H_7$ | $C_2H_5$ | H |
| 57 | 2,5-Dimethylcyclohexen-1-yl | $C_3H_7$ | $-CH_2-CH=CH_2$ | H |
| 58 | desgl. | $C_3H_7$ | $-CH_2-CH=CHCl$ | H |
| 59 | desgl. | $C_3H_7$ | $C_2H_5$ | H |
| 60 | 1,1,3-Trimethylcyclohexen-1-yl-2 | $C_3H_7$ | $CH_3$ | H |
| 61 | desgl. | $C_2H_5$ | $-CH_2-CH=CHCl$ | H |
| 62 | desgl. | $CH_3$ | $C_2H_5$ | H |
| 63 | desgl. | $CH_3$ | $-CH_2-CH=CH_2$ | H |
| 64 | 2,4,4-Trimethylcyclohexen-1-yl-3 | $C_2H_5$ | $C_2H_5$ | H |
| 65 | desgl. | $C_2H_5$ | $-CH_2-CH=CH_2$ | H |
| 66 | desgl. | $C_2H_5$ | $-CH_2-CH=CHCl$ | H |
| 67 | 1,3,3-Trimethylcyclohexen-1-yl-2 | $C_2H_5$ | $CH_3$ | H |
| 68 | 1,3,3-Trimethylcyclohexen-1-yl-3 | $C_2H_5$ | $C_2H_5$ | $COOCH_3$ |

Die an diesen Verbindungen festgestellten $^1H$-NMR-spektroskopischen Daten sind in folgender Tabelle aufgeführt. Die chemischen Verschiebungen sind auf Tetramethylsilan als internem Standard bezogen und in $\delta$-Werten (ppm) angegeben. Abkürzungen für die Signalstrukturen: s = Singulett, d = Dublett, t = Triplett, q = Quartett.

| Verbindung/ Wirkstoff Nr. | Charakteristische Signale Oximether-Teil $-O-\underline{CH_2}-$ | 5-Cyclohexenyl-Teil $\underline{H}-C=C-\underline{H}$ | bzw. $\underline{CH_3}-C=C$ |
|---|---|---|---|
| 1 | 4.50, d | 5.65, s | |
| 2 | 4.55, d | | 1.70, s |
| 3 | 4.15, q | | 1.75, s |
| 4 | 4.53, d | 5.65, s | |
| 5 | 4.10, q | 5.65, s | |
| 6 | 4.10, q | 5.70, s | |
| 7 | 4.55, d | 5.70, s | |
| 8 | 4.05, q | 5.57, s | |
| 9 | 4.50, d | 5.60, s | |
| 10 | 4.10, q | 5.60, s | |
| 11 | 4.55, d | | 1.75, s |
| 12 | 4.05, q | | 1.70, s |
| 13 | 3.95, t | | 1.70, s |
| 14 | 4.55, d | | 1.70, s |
| 15 | 4.55, d | | 1.70, s |
| 16 | 4.15, q | | 1.72, s |
| 17 | 4.55, d | | 1.80, s |
| 18 | 4.10, q | | 1.70, s |
| 19 | 4.55, d | | 1.70, s |
| 20 | 4.05, q | | 1.70, s |
| 21 | 4.55, d | | 1.75, s |
| 22 | 4.10, q | | 1.75, s |
| 23 | 4.50, d | | 1.75, s |
| 24 | 4.10, q | | 1.75, s |
| 25 | 4.80, s | | 1.70, s |
| 26 | 4.60, s | | 1.75, s |

(Fortsetzung)

| Verbindung/ Wirkstoff Nr. | Charakteristische Signale Oximether-Teil $-O-\underline{CH_2}-$ | 5-Cyclohexenyl-Teil $\underline{H}-C=C-\underline{H}$ | bzw. $\underline{CH_3}-C=C$ |
|---|---|---|---|
| 27 | 4.55, q | | 1.68, s |
| 28 | 4.05, q | | 1.70, s |
| 29 | 4.45, d | | 1.70, s |
| 30 | 4.10, q | | 1.80, s |
| 31 | 4.56, d | | 1.78, s |
| 32 | 4.10, q | | 1.70, s |
| 33 | 4.55, d | | 1.73, s |
| 34 | 4.10, q | | 1.70, s |
| 35 | 4.50, d | | 1.70, s |
| 38 | 4.10, q | 5.38, m | 1.68, s |
| 39 | 4.50, d | 5.35, m | 1.65, s |
| 40 | 4.05, q | 5.30, m | 1.63, s |
| 41 | 4.50, d | 5.32, m | 1.63, s |
| 42 | 4.70, d, 4.40, d | 5.35, m | 1.65, s |
| 43 | 45.1, q | 5.60, m | |
| 44 | 4.52, d | 5.60, m | |
| 45 | 4.65, d, 4.35, d | 5.60, m | |
| 46 | 4.05, q | | 1.60, s |
| 47 | 4,50, d | | 1.63, s |
| 48 | 4.65, d, 4.40, d | | 1.60, s |
| 49 | 4.10, q | | 1.60, s |
| 50 | 4.55, d | | 1.65, s |
| 53 | 4.05, q | | |
| 54 | 4.50, d | | 1.63, s |
| 55 | 4.70, d, 4.35, d | | 1.60, s |
| 57 | 4.45, d | | 1.63, s |
| 58 | 4.70, d, 4.40, d | | 1.60, s |
| 59 | 4.10, q | | |

(Fortsetzung)

| Verbindung/ Wirkstoff Nr. | Charakteristische Signale Oximether-Teil —O—$\underline{CH_2}$— | 5-Cyclohexenyl-Teil $\underline{H}$—C=C—$\underline{H}$ | bzw. $\underline{CH_3}$—C=C |
|---|---|---|---|
| 60 | 3.80, s | | 1.70, s |
| 61 | 4.70, d, 4.35, d | | 1.65 |
| 62 | 4.10, q | | 1.70 |
| 63 | 4.50, d | | 1.70 |
| 64 | 4.10, q | | 1.70 |
| 65 | 4.50, q | | 1.70 |
| 66 | 4.65, d, 4.40, d | | 1.70 |
| 67 | 3.80, s | | 1.72, s |
| 68 | 4.10, q | 5.55, s | 1.80, s |

Die Wirkstoffe können als solche, in Form ihrer Formulierungen oder den daraus bereiteten Anwendungsformen, z. B. in Form von direkt versprühbaren Lösungen, Pulvern, Suspensionen oder Dispersionen, Emulsionen, Öldispersionen, Pasten, Stäubemitteln, Granulaten durch Versprühen, Vernebeln, Verstäuben, Verstreuen, Beizen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten. Die Mittel enthalten im allgemeinen 0,1 bis 95% (Gew.-%), insbesondere 10 bis 80% Wirkstoff.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenon, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

## Beispiel I

Man vermischt 90 Gewichtsteile der Verbindung 1 mit 10 Gewichtsteilen N-Methyl-alpha-pyrrolidon und erhält eine Lösung, die zur Anwendung in Form kleinster Tropfen geeignet ist.

## Beispiel II

10 Gewichtsteile der Verbindung 2 werden in einer Mischung gelöst, die aus 90 Gewichtsteilen Xylol, 6 Gewichtsteilen des Anlagerungsproduktes von 8 bis 10 Mol Ethylenoxid an 1 Mol Ölsäure-N-monoethanolamid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht.

## Beispiel III

20 Gewichtsteile der Verbindung 2 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Ethylenoxid an 1 Mol Isooctylphenol und 5 Gewichtsteilen des Anlagerungsproduktes von 40 Mol Ethylenoxid an 1 Mol Ricinusöl besteht.

## Beispiel IV

20 Gewichtsteile der Verbindung 3 werden in einer Mischung gelöst, die aus 25 Gewichtsteilen Cyclohexanon, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht.

## Beispiel V

80 Gewichtsteile der Verbindung 1 werden mit 3 Gewichtsteilen des Natriumsalzes der Diisobutylnaphthalin-alpha-sulfonsäure, 10 Gewichtsteilen des Natriumsalzes einer Ligninsulfonsäure aus einer Sulfit-Ablauge und 7 Gewichtsteilen pulverförmigem Kieselsäuregel gut vermischt und in einer Hammermühle vermahlen.

## Beispiel VI

5 Gewichtsteile der Verbindung 1 werden mit 95 Gewichtsteilen feinteiligem Kaolin innig vermischt. Man erhält auf diese Weise ein Stäubemittel, das 95 Gewichtsprozent des Wirkstoffs enthält.

## Beispiel VII

30 Gewichtsprozent der Verbindung 1 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

## Beispiel VIII

40 Gewichtsteile der Verbindung 1 werden mit 10 Teilen Natriumsalz eines Phenolsulfonsäure-harnstoff-formaldehyd-kondensats, 2 Teilen Kieselgel und 48 Teilen Wasser innig vermischt. Man erhält eine stabile wäßrige Dispersion.

## Beispiel IX

20 Teile der Verbindung 1 werden mit 12 Teilen Calciumsalz der Dodecylbenzolsulfonsäure, 8 Teile Fettalkohol-polyglykolether, 2 Teilen Natriumsalz eines Phenolsulfonsäure-harnstoff-formaldehyd-kondensats und 68 Teilen eines paraffinischen Mineralöls innig vermischt. Man erhält eine stabile ölige Dispersion.

Der Einfluß von Vertretern der neuen Cyclohexan-1,3-dion-Derivate auf das Wachstum von

erwünschten und unerwünschten Pflanzen wird anhand von Gewächshausversuchen aufgezeigt.

Als Kulturgefäße dienten Plastikblumentöpfe mit 300 $cm^3$ Inhalt und lehmiger Sand mit etwa 1,5% Humus als Substrat. Bei Glycine max und Oryza sativa wurde etwas Torf (peat) zugesetzt, um ein besseres Wachstum zu gewährleisten. Die Samen der in Tabelle 1 aufgeführten Pflanzen säte man nach Arten getrennt flach ein. Für die hier beschriebene Nachauflaufbehandlung zog man die Testpflanzen je nach Wuchsform bis zu einer Wuchshöhe von 3 bis 15 cm an. Danach wurden die Wirkstoffe beispielsweise in einer Aufwandmenge von 0,125 kg/ha Aktivsubstanz aufgebracht. Man benutzte dabei Wasser als Verteilungsmittel, worin man die Wirkstoffe suspendiert oder emulgiert mittels fein verteilender Düsen verspritzte.

Als Vergleichsmittel in diesen Versuchen dienten Folgende Verbindungen:

A 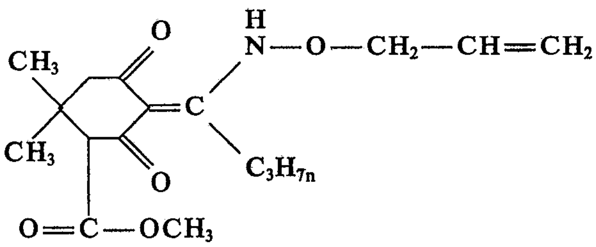 Na-Salz (DE-OS 2 439 104)

B 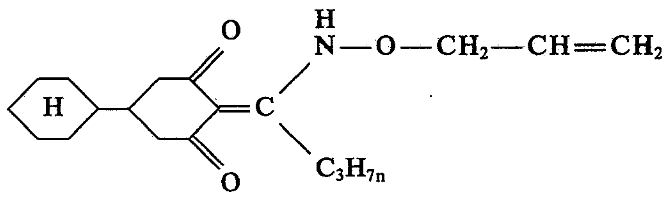 (JP-OS 54 019 945)

C 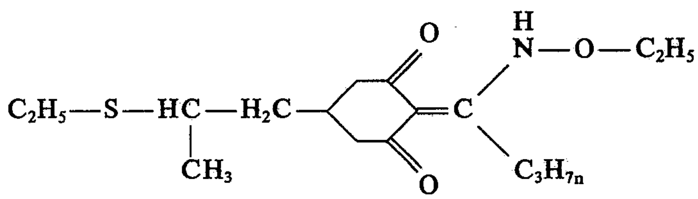 (DE-OS 2 822 304)

D 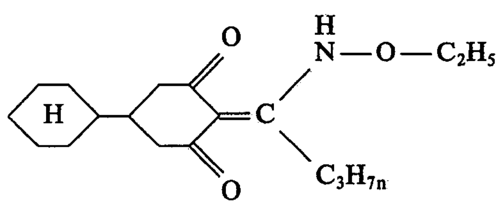 (JP-OS 54 019 945)

Tabelle 1

Liste der Pflanzennamen

| Botanischer Name | Abkürzung in Tabelle | Deutscher Name | Englischer Name |
|---|---|---|---|
| Alopecurus myosuroides | Alopec. myos. | Acker-Fuchsschwanzgras | Blackgrass |
| Beta vulgaris | Beta vulg. | Zuckerrübe | sugarbeets |
| Digitaria sanguinalis | Digit. sang. | Blutfingerhirse | large crabgrass |
| Glycine max | – | Soja | soybeans |
| Leptochloa spp. | Leptochl. spp. | – | sprangletop spp. |
| Oryza sativa | Oryza sat. | Reis | rice |
| Sorghum halepense | Sorgh. Halep. | – | johnsongrass |
| Triticum aestivum | Tritic. aest. | Weizen | wheat |
| Gossypium hirsutum | – | Baumwolle | cotton |

Die Durchführung der Versuche erfolgte im Gewächshaus, wobei für wärmeliebende Arten wärmere Bereiche (20 bis 35°C) und für solche gemäßigter Klimate 10 bis 20°C bevorzugt wurden. Die Vergleichsperiode erstreckte sich über 2 bis 4 Wochen. Während dieser Zeit wurden die Pflanzen gepflegt und ihre Reaktion auf die einzelnen Behandlungen ausgewertet. Bewertet wurde nach einer Skala von 0 bis 100. Dabei bedeutet 0 keine Schädigung oder normaler Aufgang und 100 kein Aufgang bzw. völlige Zerstörung zumindest der oberirdischen Sproßteile.

Die Ergebnisse zeigen, daß die neuen erfindungsgemäßen Verbindungen geeignet sind zur Bekämpfung unerwünschter Gräser in Getreide und Reis bei gleichzeitig sehr guter Verträglichkeit auch für breitblättrige Kulturen.

Bei einem Versuch zur Prüfung der herbiziden Wirkung bei Nachauflaufbehandlung im Gewächshaus zeigte die neue Verbindung 2 bei der Aufwandmenge von 0,125 kg/ha eine vergleichsweise bessere Bekämpfung unerwünschter Gräser als die Vergleichsmittel A und B, aber eine geringfügig schwächere Wirkung als Vergleichsmittel C. Gegenüber allen drei Vergleichssubstanzen A, B und C hatte Wirkstoff Nr. 2 aber eine viel bessere Verträglichkeit für Reis und Weizen.

Bei einem Versuch zur Bekämpfung unerwünschter Gräser bei Nachauflaufanwendung hatten die erfindungsgemäßen Wirkstoffe 1 und 6 bei einer Aufwandmenge von 0,125 kg/ha eine bessere herbizide Wirkung und eine deutlich bessere Verträglichkeit für die Kulturpflanze Reis als der bekannte Wirkstoff D.

Im Nachauflaufverfahren im Gewächshaus wurden Versuche zur Fetstellung der herbiziden Wirkung der Verbindungen Nr. 12, 15, 19, 20 und 27 und ihrer Verträglichkeit für Kulturpflanzen durchgeführt. Direkt gegenübergestellt wurden die bekannten Vergleichsverbindungen B und D.

In diesen Gewächshausversuchen zeigte sich, daß die Verbindungen Nr. 12, 15, 19, 20 und 27 im Durchschnitt eine ähnliche herbizide Aktivität gegen unerwünschte Gräser besitzen wie das bekannte Vergleichsmittel B und eine stärkere herbizide Aktivität als das Vergleichsmittel D. Alle Wirkstoffe sind für breitblättrige Kulturen ähnlich gut verträglich. Entscheidend ist aber, daß die bekannten Vergleichsverbindungen B und D das Getreide, z. B. Winterweizen, stark schädigen, während die neuen Verbindungen in dieser Kultur selektiv sind.

Alle hier beispielsweise aufgeführten neuen Verbindungen erwiesen sich gleichzeitig selektiv in den ebenfalls als Beispiele aufgeführten breitblättrigen Kulturen Betarüben und Soja.

Sind gewisse Kulturpflanzen gegenüber den Wirkstoffen weniger tolerant, so können auch Ausbringungstechniken angewandt werden, bei welchen die herbiziden Mittel mit Hilfe der Spritzgeräte so geleitet werden, daß die Blätter empfindlicher Kulturpflanzen nach Möglichkeit nicht getroffen werden, während sie auf die Blätter darunter wachsender unerwünschter Pflanzen oder die unbedeckte Bodenfläche gelangen (post directed, lay-bay). In Anbetracht der guten Verträglichkeit und der Vielseitigkeit der Applikationsmethoden können die erfindungsgemäßen Herbizide oder diese enthaltende Mittel noch in einer weiteren großen Zahl von Kulturpflanzen zur Beseitigung unerwünschten Pflanzenwuchses eingesetzt werden. Die Aufwandmengen können dabei zwischen 0,1 und 15 kg/ha und mehr schwanken.

In Betracht kommen beispielsweise folgende Kulturen:

| Botanischer Name | Deutscher Name | Englischer Name |
|---|---|---|
| Allium cepa | Küchenzwiebel | onions |
| Ananas comosus | Ananas | pineappel |
| Arachis hypogaea | Erdnuß | peanuts (groundnuts) |
| Asparagus officinalis | Spargel | asparagus |
| Avena sativa | Hafer | oats |
| Beta vulgaris spp. altissima | Zuckerrübe | sugarbeets |
| Beta vulgaris spp. rapa | Futterrübe | fodder beets |
| Beta vulgaris spp. esculenta | Rote Rübe | table beets, red beets |
| Brassica napus var. napus | Raps | rape seed |
| Brassica napus var. napobrassica | Kohlrübe | |
| Brassica napus var. rapa | Weiße Rübe | turnips |
| Brassica rapa var. silvestris | Rübsen | |
| Camellia sinensis | Teestrauch | tea plants |
| Carthamus tinctorius | Saflor – Färberdistel | safflower |
| Cary illinoinensis | Pekannußbaum | pecan trees |
| Citrus limon | Zitrone | lemon |
| Citrus maxima | Pampelmuse | grapefruits |
| Citrus reticulata | Mandarine | |
| Citrus sinensis | Apfelsine, Orange | orange trees |
| Coffea arabica (Coffea canephora, Coffea liberica) | Kaffee | coffee plants |
| Cucumis melo | Melone | melons |
| Cucumis sativus | Gurke | cucumber |
| Cynodon dactylon | Bermudagras | Bermudagrass in turfs and lawn |
| Daucus carota | Möhre | carrots |
| Elaeis guineensis | Ölpalme | oil palms |
| Fragaria vesca | Erdbeere | strawberries |
| Glyoine max | Sojabohne | soybeans |
| Gossypium hirsutum (Gossypium arboreum Gossypium herbaceum Gossypium vitifolium) | Baumwolle | cotton |

Fortsetzung

| Botanischer Name | Deutscher Name | Englischer Name |
|---|---|---|
| Helianthus annuus | Sonnenblume | sunflowers |
| Helianthus tuberosus | Topinambur | |
| Hevea brasiliensis | Parakatuschukbaum | rubber plants |
| Hordeum vulgare | Gerste | barley |
| Humulus lupulus | Hopfen | hop |
| Ipomoea batatas | Süßkartoffeln | sweet potato |
| Juglans regia | Walnußbaum | walnut trees |
| Lactua sativa | Kopfsalat | lettuce |
| Lens culinaris | Linse | lentils |
| Linum usitatissimum | Faserlein | flax |
| Lycopersicon lycopersicum | Tomate | tomato |
| Malus spp. | Apfel | apple trees |
| Manihot esculenta | Maniok | cassava |
| Medicago sativa | Luzerne | alfalfa (lucerne) |
| Metha piperita | Pfefferminze | peppermint |
| Musa spp. | Obst- und Mehlbanane | banana plants |
| Nicotiana tabacum (N. rustica) | Tabak | tabacco |
| Olea europaea | Ölbaum | olive trees |
| Oryza sativa | Reis | rice |
| Panicum miliaceum | Rispenhirse | |
| Phaseolus lunatus | Mondbohne | limabeans |
| Phaseolus mungo | Erdbohne | mungbeans |
| Phaseolus vulgaris | Buschbohnen | snapbeans, green beans, dry beans |
| Pennisetum glaucum | Perl- oder Rohrkolbenhirse | |
| Petroselinum crispum spp. tuberosum | Wurzelpetersilie | parsley |
| Picea abies | Rotfichte | Norway spruce |
| Abies alba | Weißtanne | fire |
| Pinus spp. | Kiefer | pine trees |
| Pisum sativum | Gartenerbse | English peas |

Fortsetzung

| Botanischer Name | Deutscher Name | Englischer Name |
|---|---|---|
| Prunus avium | Süßkirsche | cherry trees |
| Prunus domestica | Pflaume | plum trees |
| Prunus dulcis | Mandelbaum | almond trees |
| Prunus persica | Pfirsich | peach trees |
| Pyrus communis | Birne | pear trees |
| Ribes sylvestre | Rote Johannisbeere | red currants |
| Ribes uva-crispa | Stachelbeere | |
| Ricinus communis | Rizinus | |
| Saccharum officinarum | Zuckerrohr | sugar cane |
| Secale cereale | Roggen | rye |
| Sasamum indicum | Sesam | Sesame |
| Solanum tuberosum | Kartoffel | Irish potatoes |
| Sorghum bicolor (s. vulgare) | Mohrenhirse | sorghum |
| Sorghum dochna | Zuckerhirse | |
| Spinacia oleracea | Spinat | spinach |
| Theobroma cacao | Kakaobaum | cacao plants |
| Trifolium pratense | Rotklee | red clover |
| Triticum aestivum | Weizen | wheat |
| Vaccinium corymbosum | Kulturheidelbeere | blueberry |
| Vaccinium vitis-idaea | Preißelbeere | cranberry |
| Vicia faba | Pferdebohnen | tick beans |
| Vigna sinensis (V. unguiculata) | Kuhbohne | cow peas |
| Vitis vinifera | Weinrebe | grapes |
| Zea mays | Mais | Indian corn, sweet corn maize |

Zur Verbreiterung des Wirkungsspektrums und zur Erzielung auch synergistischer Effekte können die neuen Cyclohexan-1,3-dion-Derivate mit bekannten Cyclohexan-1,3-dion-Derivaten und mit zahlreichen Vertretern anderer herbizider oder wachstumsregulierender Wirkstoffgruppen gemischt und gemeinsam ausgebracht werden. Beispielsweise kommen als Mischungspartner Diazine, 4 H-3,1-Benzoxazinderivate, Benzothiadiazinone, 2,6-Dinitroaniline, N-Phenylcarbamate, Thiocarbamate, Halogencarbonsäuren, Triazine, Amide, Harnstoffe, Diphenylether, Triazinone, Uracile, Benzofuranderivate, Cyclohexan-1,3-dionderivate und andere in Betracht. Eine Reihe von Wirkstoffen, welche zusammen mit den neuen Verbindungen für verschiedenste Anwendungsbereiche sinvolle Mischungen ergeben, werden beispielhaft aufgeführt:

5-Amino-4-chlor-2-phenyl-3(2 H)-pyridazinon

5-Amino-4-brom-2-phenyl-3(2 H)-pyridazinon
5-Amino-4-chlor-2-cyclohexyl-3(2 H)-pyridazinon
5-Amino-4-brom-2-cyclohexyl-3(2 H)-pyridazinon

5-Methylamino-4-chlor-2-(3.trifluormethylphenyl)-3(2 H)-pyridazinon
5-Methylamino-4-chlor-2-(3.α,α,β,β-tetrafluorethoxyphenyl)-3(2 H)-pyridazinon
5-Dimethylamino-4-chlor-2-phenyl-3(2 H)-pyridazinon
4,5-Dimethoxy-2-phenyl-3(2 H)-pyridazinon
4,5-Dimethoxy-2-cyclohexyl-3(2 H)-pyridazinon
4,5-Dimethoxy-2-(3.trifluormethylphenyl)-3(2 H)-pyridazinon
5-Methoxy-4-chlor-2-(3.trifluormethylphenyl)-3(2 H)-pyridazinon
5-Amino-4-brom-2-(3.methylphenyl)-3(2 H)-pyridazinon

3-(1-Methylethyl)-1 H-2,1,3-benzothiadiazin-4(3 H)-on-2,2-dioxid und Salze
3-(1-Methylethyl)-8-chlor-1 H-2,1,3-benzothiadiazin-4(3 H)-on-2,2-dioxid und Salze
3-(1-Methylethyl)-8-fluor-1 H-2,1,3-benzothiadiazin-4(3 H)-on-2,2-dioxid und Salze
3-(1-Methylethyl)-8-methyl-1 H-2,1,3-benzothiadiazin-4(3 H)-on-2,2-dioxid und Salze

1-Methoxymethyl-3-(1-methylethyl)-2,1,3-benzothiadiazin-4(3 H)-on-2,2-dioxid
1-Methoxymethyl-8-chlor-3-(1-methylethyl)-2,1,3-benzothiadiazin-4(3 H)-on-2,2-dioxid
1-Methoxymethyl-8-fluor-3-(1-methylethyl)-2,1,3-benzothiadiazin-4(3 H)-on-2,2-dioxid
1-Cyan-8-chlor-3-(1-methylethyl)-2,1,3-benzothiadiazin-4(3 H)-on-2,2-dioxid
1-Cyan-8-fluor-3-(1-methylethyl)-2,1,3-benzothiadiazin-4(3 H)-on-2,2-dioxid
1-Cyan-8-methyl-3-(1-methylethyl)-2,1,3-benzothiadiazin-4(3 H)-on-2,2-dioxid
1-Cyan-3-(1-methylethyl)-2,1,3-benzothiadiazin-4(3 H)-on-2,2-dioxid
1-Azidomethyl-3-(1-methylethyl)-2,1,3-benzothiadiazin-4(3 H)-on-2,2-dioxid
3-(1-Methylethyl)-1 H-pyridino-[3,2-e]2,1,3-thiadiazin-(4)-on-2,2-dioxid

N-(1-Ethylpropyl)-2,6-dinitro-3,4-dimethylanilin
N-(1-Methyläthyl)-N-ethyl-2,6-dinitro-4-trifluormethylanilin
N-n.Propyl-N-β-chlorethyl-2,6-dinitro-4-trifluormethylanilin
N-n.Propyl-N-cyclopropylmethyl-2,6-dinitro-4-trifluormethyl-anilin
N-Bis-(n.propyl)-2,6-dinitro-3-amino-4-trifluormethyl-anilin
N-Bis-(n.propyl)-2,6-dinitro-4-methyl-anilin
N-Bis-(n.propyl)-2,6-dinitro-4-methylsulfonyl-anilin
N-Bis-(n.propyl)-2,6-dinitro-4-aminosulfonyl-anilin
Bis-(β-chlorethyl)-2,6-dinitro-4-methyl-anilin
N-Ethyl-N-(2-methylallyl)-2,6-dinitro-4-trifluormethyl-anilin

N-Methylcarbaminsäure-3,4-dichlorbenzylester
N-Methylcarbaminsäure-2,6-di-tert.butyl-4-methylphenylester
N-Phenylcarbaminsäure-isopropylester
N-3-Fluorphenylcarbaminsäure-3-methoxypropyl-2-ester
N-3-Chlorphenylcarbaminsäure-isopropylester
N-3-Chlorphenylcarbaminsäure-butin-1-yl-3-ester
N-3-Chlorphenylcarbaminsäure-4-chlor-butin-2-yl-1-ester
N-3,4-Dichlorphenylcarbaminsäure-methylester
N-(4-Amino-benzolsulfonyl)-carbaminsäure-methylester
O-(N-Phenylcarbamoyl)-propanonoxim
N-Ethyl-2-(phenylcarbamoyl)-oxypropionsäureamid
3'-N-Isopropyl-carbamoyloxy-propionsäureanilid

Ethyl-N-(3-(N'-phenylcarbamoyloxy)-phenyl)-carbamat
Methyl-N-(3-(N'-methyl-N'-phenylcarbamoyloxy)-phenyl)-carbamat
Isopropyl-N-(3-N'-ethyl-N'-phenylcarbamoyloxy)-phenyl)-carbamat
Methyl-N-(3-(N'-3-methylphenylcarbamoyloxy)-phenyl)-carbamat
Methyl-N-(3-N'-4-fluorphenylcarbamoyloxy)-phenyl)-carbamat
Methyl-N-(3-(N'-3-chlor-4-fluorphenylcarbamoyloxy)-phenyl)-carbamat
Ethyl-N-(3-(N'-3-chlor-4-fluorphenylcarbamoyloxy)-phenyl)-carbamat
Ethyl-N-(3-(N'-3,4-difluorphenylcarbamoyloxy)-phenyl)-carbamat
Methyl-N-(3-N'-3,4-difluorphenylcarbamoyloxy)-phenyl)-carbamat

N-3-(4-Fluorphenoxycarbonylamino)-phenylcarbaminsäuremethylester
N-3-(2-Methylphenoxycarbonylamino)-phenylcarbaminsäureethylester
N-3-(4-Fluorphenoxycarbonylamino)-phenylthiolcarbaminsäuremethylester

N-3-(2,4,5-Trimethylphenoxycarbonylamino)-phenylthiocarbaminosäure-methylester
N-3-(Phenoxycarbonylamino)-phenylthiolcarbaminsäuremethylester

N,N-Diethyl-thiolcarbaminsäure-p-chlorbenzylester
N,N-Di-n-propyl-thiolcarbaminsäure-ethylester
N,N-Di-n-propyl-thiolcarbaminsäure-n-propylester
N,N-Di-isopropyl-thiolcarbaminsäure-2,3-dichlorallylester
N,N-Di-isopropyl-thiolcarbaminsäure-2,3,3-trichlorallylester
N,N-Di-isopropyl-thiolcarbaminsäure-3-methyl-5-isoxazolyl-methylester
N,N-Di-isopropyl-thiolcarbaminsäure-3-ethyl-5-isoxazolyl-methylester
N,N-Di-sec.butyl-thiolcarbaminsäure-ethylester
N,N-Di-sec.butyl-thiolcarbaminsäure-benzylester
N-Ethyl-N-cyclohexyl-thiolcarbaminsäure-ethylester
N-Ethyl-N-bicyclo-[2,2,1]-heptyl-thiolcarbaminsäure-ethylester
S-(2,3-Dichlorallyl)-(2,2,4-trimethyl-azetidin)-1-carbothiolat
S-(2,3,3-Trichlorallyl)-(2,2,4-trimethyl-azetidin)-1-carbothiolat
S-Ethyl-hexahydro-1-H-azepin-1-carbothiolat
S-Benzyl-3-methylhexahydro-1-H-azepin-1-carbothiolat
S-Benzyl-2,3-dimethylhexahydro-1-H-azepin-1-carbothiolat
S-Ethyl-3-methylhexahydro-1-H-azepin-1-carbothiolat
N-Ethyl-N-n-butyl-thiolcarbaminsäure-n-propylester
N,N-Dimethyl-dithiocarbaminsäure-2-chlorallylester
N-Methyl-dithiocarbaminsäure-Natriumsalz
Trichloressigsäure-Natriumsalz
$\alpha,\alpha$-Dichlorpropionsäure-Natriumsalz
$\alpha,\alpha$-Dichlorbuttersäure-Natriumsalz
$\alpha,\alpha,\beta,\beta$-Tetrafluorpropionsäure-Natriumsalz
$\alpha$-Methyl,$\alpha,\beta$-dichlorpropionsäure-Natriumsalz
$\alpha$-Chlor-$\beta$-(4-chlorphenyl)-propionsäure-methylester
$\alpha,\beta$-Dichlor-$\beta$-phenylpropionsäure-methylester
Benzamido-oxy-essigsäure
2,3,5-Triiodbenzoesäure (Salze, Ester, Amide)
2,3,6-Trichlorbenzoesäure (Salze, Ester, Amide)
2,3,5,6-Tetrachlorbenzoesäure (Salze, Ester, Amide)
2-Methoxy-3,6-dichlorbenzoesäure (Salze, Ester, Amide)
2-Methoxy-3,5,6-trichlorbenzoesäure (Salze, Ester, Amide)
3-Amino-2,5,6-trichlorbenzoesäure (Salze, Ester, Amide)
O,S-Dimethyl-tetrachlor-thioterephthalat
Dimethyl-2,3,5,6-tetrachlor-terephthalat
Dinatrium-3,6-endoxohexahydro-phthalat
4-Amino-3,5,6-trichlor-picolinsäure (Salze)
2-Cyan-3-(N-methyl-N-phenyl)-amino-acrylsäureethylester
2-[4-(4'-Chlorphenoxy)-phenoxy]-propionsäureisobutylester
2-[4-(2',4'-Dichlorphenoxy)-phenoxy]-propionsäuremethylester
2-[4-(4'-Trifluormethylphenoxy)-phenoxy]-propionsäuremethylester
2-[4-(2'-Chlor-4'-trifluorphenoxy)-phenoxy]-propionsäure-Natriumsalz
2-[4-(3',5'-Dichlorpyridyl-2-oxy)-phenoxy]-propionsäure-Natriumsalz

2-(N-Benzoyl-3,4-dichlorphenylamino)-propionsäureethylester
2-(N-Benzoyl-3-chlor-4-fluorphenylamino)-propionsäure-methylester
2-(N-Benzoyl-3-chlor-4-fluorphenylamino)-propionsäure-isopropylester
2-Chlor-4-ethylamino-6-isopropylamino-1,3,5-triazin
2-Chlor-4-ethylamino-6-(amino-2'-propionitril)-1,3,5-triazin
2-Chlor-4-ethylamino-6-2-methoxypropyl-2-amino-1,3,5-triazin
2-Chlor-4-ethylamino-6-butin-1-yl-2-amino-1,3,5-triazin
2-Chlor-4,6-bisethylamino-1,3,5-triazin
2-Chlor-4,6-bisisopropylamino-1,3,5-triazin
2-Chlor-4-isopropylamino-6-cyclopropylamino-1,3,5-triazin

2-Azido-4-methylamino-6-isopropylamino-1,3,5-triazin
2-Methylthio-4-ethylamino-6-isopropylamino-1,3,5-triazin
2-Methylthio-4-ethylamino-6-tert.butylamino-1,3,5-triazin
2-Methylthio-4,6-bisethylamino-1,3,5-triazin
2-Methylthio-4,6-bisisopropylamino-1,3,5-triazin
2-Methoxy-4-ethylamino-6-isopropylamino-1,3,5-triazin

2-Methoxy-4,6-bisethylamino-1,3,5-triazin
2-Methoxy-4,6-bisisopropylamino-1,3,5-triazin
4-Amino-6-tert.butyl-3-methylthio-4,5-dihydro-1,2,4-triazin-5-on
4-Amino-6-phenyl-3-methyl-4,5-dihydro-1,2,4-triazin-5-on
4-Isobutylidenamino-6-tert.butyl-3-methylthio-4,5-dihydro-1,2,4-triazin-5-on
1-Methyl-3-cyclohexyl-6-dimethylamino-1,3,5-triazin-2,4-dion

3-tert.Butyl-5-chlor-6-methyluracil
3-tert.Butyl-5-brom-6-methyluracil
3-Isopropyl-5-brom-6-methyluracil
3-sec.Butyl-5-brom-6-methyluracil
3-(2-Tetrahydropyranyl)-5-chlor-6-methyluracil
3-(2-Tetrahydropyranyl)-5,6-trimethylenuracil
3-Cyclohexyl-5,6-trimethyluracil

2-Methyl-4-(3'-trifluormethylphenyl)-tetrahydro-1,2,4-oxadiazin-3,5-dion
2-Methyl-4-(4'-fluorphenyl)-tetrahydro-1,2,4-oxadiazin-3,5-dion
3-Amino-1,2,4-triazol
1-Allyloxy-1-(4-bromphenyl)-2-[1',2',4'-triazolyl-(1')-1-ethan (Salze)
1-(4-Chlorphenoxy-3,3-dimethyl-1(1 H-1,2,4-triazol-1-yl)-2-butanon
N,N-Diallylchloracetamid
N-Isopropyl-2-chloracetanilid
N-(1-Methyl-propin-2-yl)-2-chloracetanilid

2-Methyl-6-ethyl-N-(propargyl)-2-chloracetanilid
2-Methyl-6-ethyl-N-(ethoxymethyl)-2-chloracetanilid
2-Methyl-6-ethyl-N-(2-methoxy-1-methylethyl)-2-chloracetanilid
2-Methyl-6-ethyl-N-(isopropoxycarbonylethyl)-2-chloracetanilid
2-Methyl-6-ethyl-N-(4-methoxypyrazol-1-yl-methyl)-2-chloracetanilid
2-Methyl-6-ethyl-N-(pyrazol-1-yl-methyl)-2-chloracetanilid
2,6-Dimethyl-N-(pyrazol-1-yl-methyl)-2-chloracetanilid
2,6-Dimethyl-N-(4-methylpyrazol-1-yl-methyl)-2-chloracetanilid
2,6-Dimethyl-N-(1,2,4-triazol-1-yl-methyl)-2-chloracetanilid
2,6-Dimethyl-N-(3,5-dimethylpyrazol-1-yl-methyl)-2-chloracetanilid
2,6-Dimethyl-N-(1,3-dioxolan-2-yl-methyl)-2-chloracetanilid
2,6-Dimethyl-N-(2-methoxyethyl)-2-chloracetanilid
2,6-Dimethyl-N-(isobutoxymethyl)-2-chloracetanilid
2,6-Diethyl-N-(methoxymethyl)-2-chloracetanilid
2,6-Diethyl-N-(n-butoxymethyl)-2-chloracetanilid
2,6-Diethyl-N-(ethoxycarbonylmethyl)-2-chloracetanilid
2,3,6-Trimethyl-N-(pyrazol-1-yl-methyl)-2-chloracetanilid
2,3-Dimethyl-N-(isopropyl)-2-chloracetanilid
2,6-Diethyl-N-(2-n-propoxyethyl)-2-chloracetanilid

2-(2-Methyl-4-chlorphenoxy)-N-methoxy-acetamid
2-(α-Naphtoxy)-N,N-diethylpropionamid
2,2-Diphenyl-N,N-dimethylacetamid
α-(3,4,5-Tribrompyrazol-1-yl)-N,N-dimethylpropionamid
N-(1,1-Dimethylpropinyl)-3,5-dichlorbenzamid
N-1-Naphthylphthalamidsäure
Propionsäure-3,4-dichloranilid
Cyclopropancarbonsäure-3,4-dichloranilid
Methacrylsäure-3,4-dichloranilid
2-Methylpentancarbonsäure-3,4-dichloranilid
5-Acetamido-2,4-dimethyltrifluormethan-sulfonanilid
5-Acetamido-4-methyl-trifluormethan-sulfonanilid

2-Propionyl-amino-4-methyl-5-chlor-thiazol
O-(Methylsulfonyl)-glykolsäure-N-ethoxymethyl-2,6-dimethylanilid
O-(Methylaminosulfonyl)-glykolsäure-N-isopropyl-anilid
O-(i-Propylaminosulfonyl)-glykolsäure-N-butin-1-yl-3-anilid
O-(Methylaminosulfonyl)-glykolsäure-hexamethylenimid
2,6-Dichlor-thiobenzamid
2,6-Dichlorbenzonitril
3,5-Dibrom-4-hydroxy-benzonitril (Salze)

3,5-Diiod-4-hydroxy-benzonitril (Salze)
3,5-Dibrom-4-hydroxy-O-2,4-dinitrophenylbenzaldoxim (Salze)
3,5-Dibrom-4-hydroxy-O-2-cyan-4-nitrophenylbenzaldoxim (Salze)
Pentachlorphenol-Natriumsalz
2,4-Dichlorphenyl-4'-nitrophenylether
2,4,6-Trichlorphenyl-4'-nitrophenylether
2-Fluor-4,6-dichlorphenyl-4'-nitrophenylether
2-Chlor-4-trifluormethylphenyl-4'-nitrophenylether
2,4'-Dinitro-4-trifluormethyl-diphenylether
2,4-Dichlorphenyl-3'-methoxy-4'-nitro-phenylether
2-Chlor-4-trifluormethylphenyl-3'-ethoxy-4'-nitro-phenylether
2-Chlor-4-trifluormethylphenyl-3'-carboxy-4'-nitro-phenylether (Salze)
2,4-Dichlorphenyl-3'-methoxycarbonyl-4'-nitro-phenylether
2-(3,4-Dichlorphenyl)-4-methyl-1,2,4-oxadiazolidin-3,5-dion
2-(3-tert.Butylcarbamoyl-oxyphenyl)-4-methyl-1,2,4-oxadiazolidin-3,5-dion
2-(3-iso-Propylcarbamoyl-oxyphenyl)-4-methyl-1,2,4-oxadiazolidin-3,5-dion
2-Phenyl-3,1-benzoxazinon-(4)
(4-Bromphenyl)-3,4,5,9,10-pentaazatetracyclo-[5,4,1,$0^{2,6}$,$0^{8,11}$)-dodeca-3,9-dien
2-Ethoxy-2,3-dihydro-3,3-dimethyl-5-benzofuranyl-methansulfonat
2-Ethoxy-2,3-dihydro-3,3-dimethyl-5-benzofuranyl-dimethyl-aminosulfonat
2-Ethoxy-2,3-dihydro-3,3-dimethyl-5-benzofuranyl-(N-methyl-N-acetyl)-aminosulfonat
3,4-Dichlor-1,2-benzisothiazol
N-4-Chlorphenyl-allylbernsteinsäureimid
2-Methyl-4,6-dinitrophenol (Salze, Ester)
2-sec.Butyl-4,6-dinitrophenol (Salze)
2-sec.Butyl-4,6-dinitrophenol-acetat
2-tert.Butyl-4,6-dinitrophenol-acetat

2-tert.Butyl-4,6-dinitrophenol (Salze)
2-tert.Butyl-5-methyl-4,6-dinitrophenol (Salze)
2-tert.Butyl-5-methyl-4,6-dinitrophenol-acetat

2-sec.Amyl-4,6-dinitrophenol (Salze, Ester)
1-($\alpha,\alpha$-Dimethylbenzyl)-3-(4-methylphenyl)-harnstoff
1-Phenyl-3-(2-methylcyclohexyl)-harnstoff
1-Phenyl-1-benzoyl-3,3-dimethyl-harnstoff
1-(4-Chlorphenyl)-1-benzoyl-3,3-dimethyl-harnstoff
1-(4-Chlorphenyl)-3,3-dimethyl-harnstoff
1-(4-Chlorphenyl)-3-methyl-3-butin-1-yl-3-harnstoff
1-(3,4-Dichlorphenyl)-3,3-dimethyl-harnstoff
1-(3,4-Dichlorphenyl)-1-benzoyl-3,3-dimethyl-harnstoff
1-(3,4-Dichlorphenyl)-3-methyl-3-n-butyl-harnstoff
1-(4-i-Propylphenyl)-3,3-dimethyl-harnstoff
1-(3-Trifluormethylphenyl)-3,3-dimethyl-harnstoff
1-(3-$\alpha,\alpha,\beta,\beta$-Tetrafluorethoxyphenyl)-3,3-dimethyl-harnstoff

1-(3-tert.-Butylcarbamoyloxy-phenyl)-3,3-dimethyl-harnstoff
1-(3-Chlor-4-methylphenyl)-3,3-dimethyl-harnstoff
1-(3-Chlor-4-methoxyphenyl)-3,3-dimethyl-harnstoff
1-(3,5-Dichlor-4-methoxyphenyl)-3,3-dimethyl-harnstoff
1-[4(4'-Chlorphenoxy)-phenyl]-3,3-dimethyl-harnstoff
1-[4(4'-methoxyphenoxy)-phenyl]-3,3-dimethyl-harnstoff
1-Cyclooctyl-3,3-dimethyl-harnstoff
1-(Hexahydro-4,7-methanindan-5-yl)-3,3-dimethyl-harnstoff
1-[1- oder 2-(3a,4,5,7,7a-Hexahydro)-4,7-methanoindanyl]-3,3-dimethyl-harnstoff
1-(4-Fluorphenyl)-3-carboxymethoxy-3-methyl-harnstoff
1-Phenyl-3-methyl-3-methoxy-harnstoff
1-(4-Chlorphenyl)-3-methyl-3-methoxy-harnstoff
1-(4-Bromphenyl)-3-methyl-3-methoxy-harnstoff
1-(3,4-Dichlorphenyl)-3-methyl-3-methoxy-harnstoff
1-(3-Chlor-4-bromphenyl)-3-methyl-3-methoxy-harnstoff
1-(3-Chlor-4-isopropylphenyl)-3-methyl-3-methoxy-harnstoff
1-(3-Chlor-4-methoxyphenyl)-3-methyl-3-methoxy-harnstoff
1-(3-tert.Butylphenyl)-3-methyl-3-methoxy-harnstoff
1-(2-Benzthiazolyl)-1,3-dimethyl-harnstoff

1-(2-Benzthiazolyl)-3-methyl-harnstoff
1-(5-Trifluormethyl-1,3,4-thiadiazolyl)-1,3-dimethylharnstoff
Imidazolidin-2-on-1-carbonsäure-iso-butylamid
1,2-Dimethyl-3,5-diphenylpyrazolium-methylsulfat
1,2,4-Trimethyl-3,5-diphenylpyrazolium-methylsulfat
1,2-Dimethyl-4-brom-3,5-diphenylpyrazolium-methylsulfat
1,3-Dimethyl-4-(3,4-dichlorbenzoyl)-5-[(4-methylphenyl)-sulfonyl-oxy]-pyrazol
2,3,5-Trichlor-pyridinol-(4)
1-Methyl-3-phenyl-5-(3'-trifluormethylphenyl)-pyridon-(4)
1-Methyl-4-phenyl-pyridiniumchlorid
1,1-Dimethylpyridiniumchlorid
3-Phenyl-4-hydroxy-6-chlorpyridazin
1,1'-Dimethyl-4,4'-dipyridylium-di-(methylsulfat)
1,1'-Di(3,5-dimethylmorpholin-carbonylmethyl)-4,4'-di-pyridylium-dichlorid
1,1'-Ethylen-2,2'-dipyridylium-dibromid

3-[1(N-Ethoxyamino)-propyliden]-6-ethyl-3,4-dihydro-2-H-pyran-2,4-dion
3-[1-(N-Allyloxyamino)-propyliden]-6-ethyl-3,4-dihydro-2-H-pyran-2,4-dion
2-[1-(N-Allyloxyamino)-propyliden]-5,5-dimethylcyclohexan-1,3-dion (Salze)
2-[1-(N-Allyloxyamino)-butyliden]-5,5-dimethylcyclohexan-1,3-dion (Salze)
2-[1-(N-Allyloxyamino)-butyliden]-5,5-dimethyl-4-methoxycarbonyl-cyclohexan-1,3-dion (Salze)
2-Chlorphenoxyessigsäure (Salze, Ester, Amide)
4-Chlorphenoxyessigsäure (Salze, Ester, Amide)
2,4-Dichlorphenoxyessigsäure (Salze, Ester, Amide)
2,4,5-Trichlorphenoxyessigsäure (Salze, Ester, Amide)
2-Methyl-4-chlorphenoxyessigsäure (Salze, Ester, Amide)
3,5,6-Trichlor-2-pyridinyl-oxyessigsäure (Salze, Ester, Amide)

$\alpha$-Naphthoxyessigsäuremethylester
2-(2-Methylphenoxy)-propionsäure (Salze, Ester, Amide)
2-(4-Chlorphenoxy)-propionsäure (Salze, Ester, Amide)
2-(2,4-Dichlorphenoxy)-propionsäure (Salze, Ester, Amide)
2-(2,4,5-Trichlorphenoxy)-propionsäure (Salze, Ester, Amide)
2-(2-Methyl-4-chlorphenoxy)-propionsäure (Salze, Ester, Amide)
4-(2,4-Dichlorphenoxy)-buttersäure (Salze, Ester, Amide)
4-(2-Methyl-4-chlorphenoxy)-buttersäure (Salze, Ester, Amide)
Cyclohexyl-3-(2,4-dichlorphenoxy)-acrylat
9-Hydroxyfluoren-carbonsäure-(9) (Salze, Ester)
2,3,6-Trichlorphenyl-essigsäure (Salze, Ester)
4-Chlor-2-oxo-benzothiazolin-3-yl-essigsäure (Salze, Ester)
Gibellerinsäure (Salze)
Dinatrium-methylarsonat
Mononatriumsalz der Methylarsonsäure
N-Phosphon-methyl-glycin (Salze)
N,N-Bis-(phosphonmethyl)-glycin (Salze)
2-Chlorethanphosphonsäure-2-chlorethylester
Ammonium-ethyl-carbamoyl-phosphonat
Di-n-butyl-1-n-butylamino-cyclohexyl-phosphonat
Trithiobutylphosphit
O,O-Diisopropyl-5-(2-benzosulfonylamino-ethyl)-phosphordithioat
2,3-Dihydro-5,6-dimethyl-1,4-dithiin-1,1,4,4-tetraoxid
5-tert.Butyl-3-(2,4-dichlor-5-isopropoxyphenyl)-1,3,4-oxadiazolon-(2)
4,5-Dichlor-2-trifluormethyl-benzimidazol (Salze)
1,2,3,6-Tetrahydropyridazin-3,6-dion (Salze)
Bernsteinsäure-mono-N-dimethylhydrazid (Salze)
(2-Chlorethyl)-trimethyl-ammoniumchlorid
(2-Methyl-4-phenylsulfonyl)-trifluormethansulfonanilid
1,1-Dimethyl-4,6-diisopropyl-5-indanylethylketon
Natriumchlorat
Ammoniumrhodanid
Calciumcyanamid
2-Chlor-4-trifluormethylphenyl-3'-ethoxycarbonyl-4'-nitrophenylether
1-(4-Benzyloxyphenyl)-3-methyl-3-methoxyharnstoff
2-[1-(2,5-Dimethylphenyl)-ethylsulfonyl]-pyridin-N-oxid

1-Acetyl-3-anilino-4-methoxycarbonyl-5-methylpyrazol
3-Anilino-4-methoxycarbonyl-5-methylpyrazol
3-tert.Butylamino-4-methoxycarbonyl-5-methylpyrazol
N-Benzyl-N-isopropyl-trimethylacetamid
2-[4-(4'-Chlorphenoxymethyl)-phenoxy]-propionsäuremethylester
2-[4-(5'-Brompyridyl-2-oxy)-phenoxy]-propionsäureethylester
2-[4-(5'-Jodpyridyl-2-oxy)-phenoxy]-propionsäureethylester
2-[4-(5'-Jodpyridyl-2-oxy)-phenoxy]-propionsäure-n.-butylester
2-Chlor-4-trifluormethylphenyl-3'-(2-fluorethoxy)-4'-nitro-phenylether
2-Chlor-4-trifluormethylphenyl-3-(ethoxycarbonyl)methylthio-4-nitrophenylether
2,4,6-Trichlorphenyl-3(ethoxycarbonyl)methylthio-4-nitro-phenylether
2-[1-(N-ethoxamino)-butyliden]-5-(2-ethylthiopropyl)-3-hydroxy-cyclohexen-(2)-on-(1) (Salze)
2-[1-(N-ethoxamino)-butyliden]-5-(2-phenylthiopropyl)-3-hydroxy-cyclohexen-(2)-on-(1) (Salze)

4-[4-(4'-Trifluormethyl)-phenoxy]-penten-2-carbonsäureethylester
2-Chlor-4-trifluormethyl-3'-methoxycarbonyl-4'-nitrophenylether
2,4-Dichlorphenyl-3'-carboxy-4'-nitrophenylether (Salze)
4,5-Dimethoxy-2-(3-$\alpha,\alpha,\beta$-trifluor-$\beta$-bromethoxyphenyl)-3-(2 H)-pyridazinon
2,4-Dichlorphenyl-3'-ethoxy-ethoxy-ethoxy-4'-nitrophenylether
2,3-Dihydro-3,3-dimethyl-5-benzofuranyl-ethansulfonat
N-[4-Methoxy-6-methyl-1,3,5-triazin-2-yl-aminocarbonyl]-2-chlorbenzolsulfonamid
1(3-Chlor-4-ethoxyphenyl)-3,3-dimethylharnstoff
2-Methyl-4-Chlorphenoxy-thioessigsäureethylester
2-Chlor-3,5-dijod-4-acetoxy-piridin
1(-4-[2-(4-Methylphenyl)-äthoxy]-phenyl-3-methyl-3-methoxyharnstoff
2,6-Dimethyl-N-(pyrazol-1-yl-methylenoxymethyl)-2-chloracetanilid
2-Methyl-6-äthyl-N-(pyrazol-1-yl-methylenoxymethyl)-2-chloracetanilid
2-Methyl-6-äthyl-N-(pyrazol-1-yl-methylenoxymethyl)-2-chloracetanilid
1-($\alpha$-2,4-Dichlorphenoxypropionsäure)-3-(O-methylcarbamoyl)-anilid
1($\alpha$-2-Brom-4-chlorphenoxypropionsäure)-3-(O-methylcarbamoyl)-anilid

**Patentansprüche**

1. Cyclohexan-1,3-dion-Derivat der allgemeinen Formel

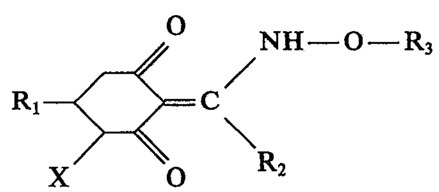

in der

$R_1$ ein gegebenenfalls durch 1 bis 5 Alkylgruppen substituiertes Cyclohexenyl oder Cyclohexadienyl,
X Wasserstoff, Alkoxycarbonyl mit 1 bis 2 Kohlenstoffatomen im Alkoxyrest,
$R_2$ Alkyl mit 1 bis 5 Kohlenstoffatomen und
$R_3$ Alkyl mit 1 bis 4 Kohlenstoffatomen, Alkenyl mit 3 bis 4 Kohlenstoffatomen, Propargyl oder Halogenalkenyl mit 3 bis 4 Kohlenstoffatomen und 1 bis 3 Halogenatomen bedeutet, und die Salze dieser Verbindungen.

2. Herbizid, enthaltend ein Cyclohexan-1,3-dion-Derivat der allgemeinen Formel

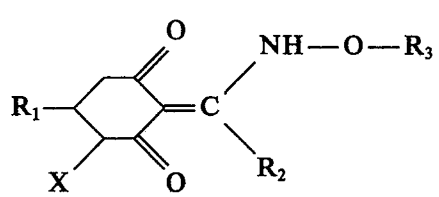

in der

$R_1$ ein gegebenenfalls durch 1 bis 5 Alkylgruppen substituiertes Cyclohexenyl oder Cyclohexadienyl,
X Wasserstoff, Alkoxycarbonyl mit 1 bis 2 Kohlenstoffatomen im Alkoxyrest,

$R_2$ Alkyl mit 1 bis 5 Kohlenstoffatomen und
$R_3$ Alkyl mit 1 bis 4 Kohlenstoffatomen, Alkenyl mit 3 bis 4 Kohlenstoffatomen, Propargyl oder Halogenalkenyl mit 3 bis 4 Kohlenstoffatomen und 1 bis 3 Halogenatomen bedeutet, und die Salze dieser Verbindungen.

3. Herbizid, enthaltend einen festen oder flüssigen Trägerstoff und ein Cyclohexan-1,3-dion-Derivat der allgeinen Formel

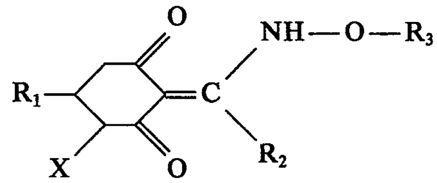

in der

$R_1$ ein gegebenenfalls durch 1 bis 5 Alkylgruppen substituiertes Cyclohexenyl oder Cyclohexadienyl,
X Wasserstoff, Alkoxycarbonyl mit 1 bis 2 Kohlenstoffatomen im Alkoxyrest,
$R_2$ Alkyl mit 1 bis 5 Kohlenstoffatomen und
$R_3$ Alkyl mit 1 bis 4 Kohlenstoffatomen, Alkenyl mit 3 bis 4 Kohlenstoffatomen, Propargyl oder Halogenalkenyl mit 3 bis 4 Kohlenstoffatomen und 1 bis 3 Halogenatomen bedeutet, und die Salze dieser Verbindungen.

4. Verfahren zur Herstellung eines Herbizids, dadurch gekennzeichnet, daß man einen festen oder flüssigen Trägerstoff mit einem Cyclohexan-1,3-dion-Derivat der allgemeinen Formel

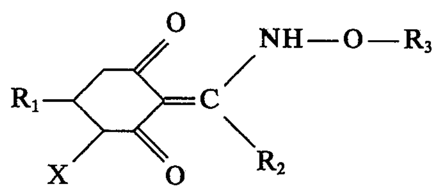

in der

$R_1$ ein gegebenenfalls durch 1 bis 5 Alkylgruppen substituiertes Cyclohexenyl oder Cyclohexadienyl,
X Wasserstoff, Alkoxycarbonyl mit 1 bis 2 Kohlenstoffatomen im Alkoxyrest,
$R^2$ Alkyl mit 1 bis 5 Kohlenstoffatomen und
$R^3$ Alkyl mit 1 bis 4 Kohlenstoffatomen, Alkenyl mit 3 bis 4 Kohlenstoffatomen, Propargyl oder Halogenalkenyl mit 3 bis 4 Kohlenstoffatomen und 1 bis 3 Halogenatomen bedeuten, oder einem Salz eines solchen Cyclohexan-1,3-dion-Derivats vermischt.

5. Verfahren zur Bekämpfung von unerwünschten Pflanzen, dadurch gekennzeichnet, daß man die Pflanzen oder den Boden behandelt mit einem Cyclohexan-1,3-dion-Derivat der allgemeinen Formel

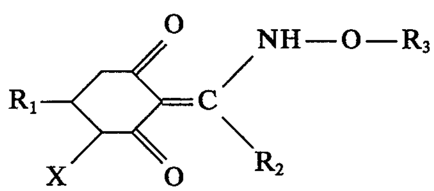

in der

$R_1$ ein gegebenenfalls durch 1 bis 5 Alkylgruppen substituiertes Cyclohexenyl oder Cyclohexadienyl,
X Wasserstoff, Alkoxycarbonyl mit 1 bis 2 Kohlenstoffatomen im Alkoxyrest,
$R_2$ Alkyl mit 1 bis 5 Kohlenstoffatomen und
$R_3$ Alkyl mit 1 bis 4 Kohlenstoffatomen, Alkenyl mit 3 bis 4 Kohlenstoffatomen, Propargyl oder Halogenalkenyl mit 3 bis 4 Kohlenstoffatomen und 1 bis 3 Halogenatomen bedeutet, und die Salze dieser Verbindungen.

6. Verfahren zur Herstellung eines Cyclohexan-1,3-dion-Derivates der allgemeinen Formel

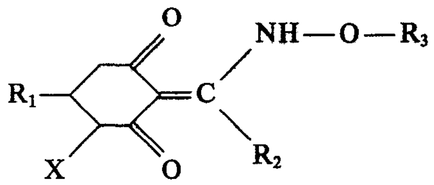

in der

$R_1$ ein gegebenenfalls durch 1 bis 5 Alkylgruppen substituiertes Cyclohexenyl oder Cyclohexadienyl,
X Wasserstoff, Alkoxycarbonyl mit 1 bis 2 Kohlenstoffatomen im Alkoxyrest,
$R_2$ Alkyl mit 1 bis 5 Kohlenstoffatomen und
$R_3$ Alkyl mit 1 bis 4 Kohlenstoffatomen, Alkenyl mit 3 bis 4 Kohlenstoffatomen, Propargyl oder Halogenalkenyl mit 3 bis 4 Kohlenstoffatomen und 1 bis 3 Halogenatomen bedeutet, und die Salze dieser Verbindungen, dadurch gekennzeichnet, daß man eine Verbindung der allgemeinen Formel

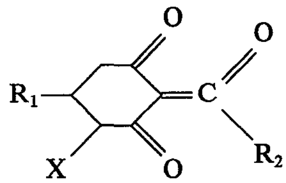

mit einer Ammoniumverbindung der Formel $R^3$-O-$NH_3Y$, in denen $R^1$, $R^2$, $R^3$ und X die in Anspruch 1 genannten Bedeutungen haben und Y ein Anion bedeutet, in einem inerten Lösungsmittel bei Temperaturen von 0 bis 80°C in Gegenwart einer Base umsetzt.

7. Cyclohexan-1,3-dion-Derivat der Gruppe, bestehend aus 2-(1-Allyloxyaminobutyliden)-5-(1,3,3-trimethylcyclohexen-1-yl-2)-cyclohexan-1,3-dion.

8. Herbizid, enthaltend 2-(1-Allyloxyaminobutyliden)-5-(1,3,3-trimethylcyclohexen-1-yl-2)-cyclohexan-1,3-dion.

**Claims**

1. A cyclohexane-1,3-dione derivative of the general formula

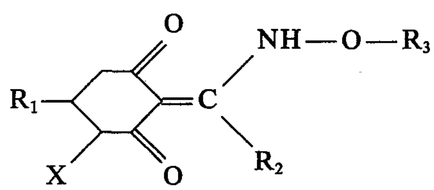

where $R_1$ is cyclohexenyl or cyclohexadienyl which is unsubstituted or substituted by from 1 to 5 alkyl groups, X is hydrogen or alkoxycarbonyl, where alkoxy is of 1 or 2 carbon atoms, $R_2$ is alkyl of 1 to 5 carbon atoms, and $R_3$ is alkyl of 1 to 4 carbon atoms, alkenyl of 3 or 4 carbon atoms, propargyl or haloalkenyl of 3 or 4 carbon atoms and 1 to 3 halogen atoms, and the salts thereof.

2. A herbicide containing a cyclohexane-1,3-dione derivative of the general formula

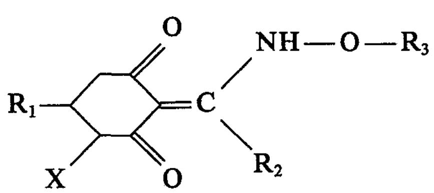

where $R_1$ is cyclohexenyl or cyclohexadienyl which is unsubstituted or substituted by from 1 to 5 alkyl groups, X is hydrogen or alkoxycarbonyl, where alkoxy is of 1 or 2 carbon atoms, $R_2$ is alkyl of 1 to 5 carbon atoms, and $R_3$ is alkyl of 1 to 4 carbon atoms, alkenyl of 3 or 4 carbon atoms, propargyl or haloalkenyl of 3 or 4 carbon atoms and 1 to 3 halogen atoms, or a salt thereof.

3. A herbicide containing a solid or liquid carrier and a cyclohexane-1,3-dione derivative of the general formula

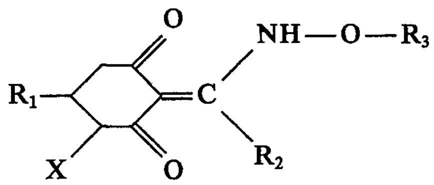

where $R_1$ is cyclohexenyl or cyclohexadienyl which is unsubstituted or substituted by from 1 to 5 alkyl groups, X is hydrogen or alkoxycarbonyl, where alkoxy is of 1 or 2 carbon atoms, $R_2$ is alkyl of 1 to 5 carbon atoms, and $R_3$ is alkyl of 1 to 4 carbon atoms, alkenyl of 3 or 4 carbon atoms, propargyl or haloalkenyl of 3 or 4 carbon atoms and 1 to 3 halogen atoms, or a salt thereof.

4. A process for preparing a herbicide, wherein a solid or liquid carrier is mixed with a cyclohexane-1,3-dione derivative of the general formula

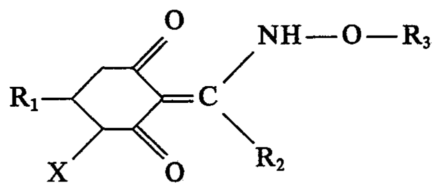

where $R_1$ is cyclohexenyl or cyclohexadienyl which is unsubstituted or substituted by from 1 to 5 alkyl groups, X is hydrogen or alkoxycarbonyl, where alkoxy is of 1 or 2 carbon atoms, $R_2$ is alkyl of 1 to 5 carbon atoms, and $R_3$ is alkyl of 1 to 4 carbon atoms, alkenyl of 3 or 4 carbon atoms, propargyl or haloalkenyl of 3 or 4 carbon atoms and 1 to 3 halogen atoms, or a salt of such a cyclohexane-1,3-dione derivative.

5. A process for combating unwanted plants, wherein the plants or the soil are treated with a cyclohexane-1,3-dione derivative of the general formula

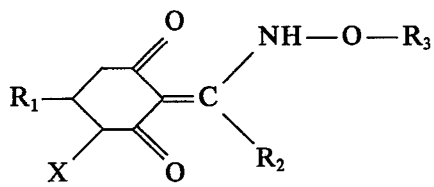

where $R_1$ is cyclohexenyl or cyclohexadienyl which is unsubstituted or substituted by from 1 to 5 alkyl groups, X is hydrogen or alkoxycarbonyl, where alkoxy is of 1 or 2 carbon atoms, $R_2$ is alkyl of 1 to 5 carbon atoms, and $R_3$ is alkyl of 1 to 4 carbon atoms, alkenyl of 3 or 4 carbon atoms, propargyl or haloalkenyl of 3 or 4 carbon atoms and 1 to 3 halogen atoms, or a salt thereof.

6. A process for preparing a cyclohexane-1,3-dione derivative of the general formula

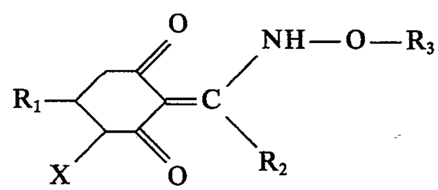

where $R_1$ is cyclohexenyl or cyclohexadienyl which is unsubstituted or substituted by from 1 to 5 alkyl groups, X is hydrogen or alkoxycarbonyl, where alkoxy is of 1 or 2 carbon atoms, $R_2$ is alkyl of 1 to 5 carbon atoms, and $R_3$ is alkyl of 1 to 4 carbon atoms, alkenyl of 3 or 4 carbon atoms, propargyl or haloalkenyl of 3 or 4 carbon atoms and 1 to 3 halogen atoms, and the salts thereof, wherein a compound of the general formula

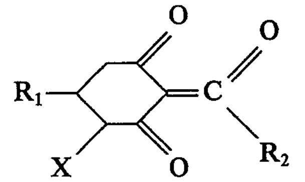

is reacted with an ammonium compound of the formula $R^3$–O–$NH_3$Y, in which formulae $R^1$, $R^2$, $R^3$ and X have the meanings given in claim 1, Y denoting an anion, in an inert solvent at a temperature of from 0

to 80°C in the presence of a base.

7. A cyclohexane-1,3-dione derivative selected from the group consisting of 2-(1-allyloxyamino-butylidene)-5-(1,3,3-trimethylcyclohex-1-en-2-yl)-cyclohexane-1,3-dione.

8. A herbicide containing 2-(1-allyloxyaminobutylidene)-5-(1,3,3-trimethylcyclohex-1-en-2-yl)-cyclohexane-1,3-dione.

**Revendications**

1. Dérivé de cyclohexane-1,3-dione de formule generale

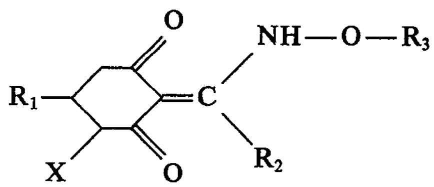

dans laquelle

$R_1$ représente un cyclohexenyle ou cyclohexadienyle éventuellement substitué par 1 à 5 groupes alkyle,
X hydrogène, alcoxycarbonyle à 1 à 2 atomes de carbone dans le reste alcoxy,
$R_2$ alkyle à 1 à 5 atomes de carbone et
$R_3$ alkyle à 1 à 4 atomes de carbone, alcényle à 3 à 4 atomes de carbone, propargyle ou halogénoalcényle à 3 à 4 atomes de carbone et 1 à 3 atomes d'halogène, et les sels de ces composés.

2. Herbicide contenant un dérivé de cyclohexane-1,3-dione de formule générale

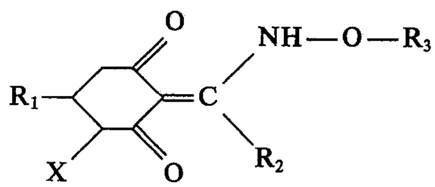

dans laquelle

$R_1$ représente un cyclohexenyle ou cyclohexadienyle éventuellement substitué par 1 à 5 groupes alkyle,
X hydrogène, alcoxycarbonyle à 1 à 2 atomes de carbone dans le reste alcoxy,
$R_2$ alkyle à 1 à 5 atomes de carbone et
$R_3$ alkyle à 1 à 4 atomes de carbone, alcényle à 3 à 4 atomes de carbone, propargyle ou halogénoalcényle à 3 à 4 atomes de carbone et 1 à 3 atomes d'halogène, et les sels de ces composés.

3. Herbicide contenant un support solide ou liquide et un dérivé de cyclohexane-1,3-dione de formule générale

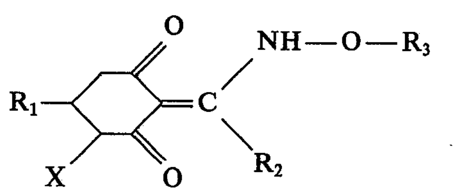

dans laquelle

$R_1$ représente un cyclohexenyle ou cyclohexadienyle éventuellement substitué par 1 à 5 groupes alkyle,
X hydrogène, alcoxycarbonyle à 1 à 2 atomes de carbone dans le reste alcoxy,
$R_2$ alkyle à 1 à 5 atomes de carbone et
$R_3$ alkyle à 1 à 4 atomes de carbone, alcényle à 3 à 4 atomes de carbone, propargyle ou halogénoalcényle à 3 à 4 atomes de carbone et 1 à 3 atomes d'halogène, et les sels de ces composés.

4. Procédé de préparation d'un herbicide, caractérisé par le fait qu'on mélange un support solide ou

liquide avec un dérivé de cyclohexane-1,3-dione de formule générale

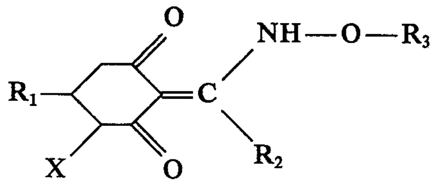

dans laquelle

$R_1$ représente un cyclohexenyle ou cyclohexadienyle éventuellement substitué par 1 à 5 groupes alkyle,
X hydrogène, alcoxycarbonyle à 1 à 2 atomes de carbone dans le reste alcoxy,
$R_2$ alkyle à 1 à 5 atomes de carbone et
$R_3$ alkyle à 1 à 4 atomes de carbone, alcényle à 3 à 4 atomes de carbone, propargyle ou halogénoalcényle à 3 à 4 atomes de carbone et 1 à 3 atomes d'halogène, ou un sel d'un tel dérivé de cyclohexane-1,3-dione.

5. Procédé de lutte contre les plantes indésirables, caractérisé par le fait que l'on traite les plantes, ou le sol, avec un dérivé de cyclohexane-1,3-dione de formule générale

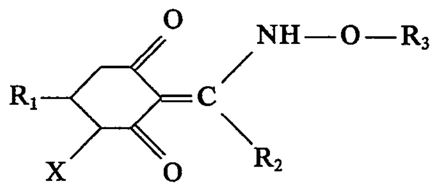

dans laquelle

$R_1$ représente un cyclohexenyle ou cyclohexadienyle éventuellement substitué par 1 à 5 groupes alkyle,
X hydrogène, alcoxycarbonyle à 1 à 2 atomes de carbone dans le reste alcoxy,
$R_2$ alkyle à 1 à 5 atomes de carbone et
$R_3$ alkyle à 1 à 4 atomes de carbone, alcényle à 3 à 4 atomes de carbone, propargyle ou halogénoalcényle à 3 à 4 atomes de carbone et 1 à 3 atomes d'halogène, et les sels de ces composés.

6. Procédé de préparation d'un dérivé de cyclohexane-1,3-dione de formule générale

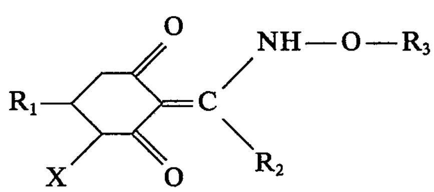

dans laquelle

$R_1$ représente un cyclohexenyle ou cyclohexadienyle éventuellement substitué par 1 à 5 groupes alkyle,
X hydrogène, alcoxycarbonyle à 1 à 2 atomes de carbone dans le reste alcoxy,
$R_2$ alkyle à 1 à 5 atomes de carbone et
$R_3$ alkyle à 1 à 4 atomes de carbone, alcényle à 3 à 4 atomes de carbone, propargyle ou halogénoalcényle à 3 à 4 atomes de carbone et 1 à 3 atomes d'halogène, et les sels de ces composés, caractérisé par le fait l'on fait réagir, dans un solvant inerte, à des températures de 0 à 80°C, en présence d'une base, un composé de formule générale

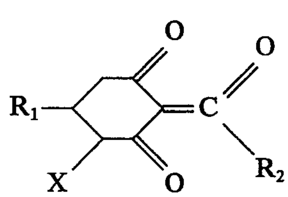

avec un composé d'ammonium de formule $R^3$—O—$NH_3Y$, dans laquelle $R_1$, $R_2$, $R_3$ et X ont les significations données dans la revendication 1 et Y représente un anion.

7. Dérivé de cyclohexane-1,3-dione, du groupe comprenant 2-(1-allyloxyaminobutylidene)-5-(1,3,3-triméthylcyclohexene-1-yl-2)-cyclohexane-1,3-dione.

8. Herbicide contenant 2-(1-allyloxyaminobutylidene)-5-(1,3,3-triméthylcyclohexene-1-yl-2)-cyclohexane-1,3-dione.